# EUROPEAN PATENT APPLICATION

(11) **EP 3 835 237 A1**
(43) Date of publication of application: **16.06.2021**
(21) Application number: 19214668.6
(22) Date of filing: 10.12.2019
(51) Int. Cl.: B65G 13/06, B65G 13/071, B65G 13/075, B65G 1/08

(54) **ROLLER CONVEYOR MODULE, SPEED CONTROL MECHANISM AND METHOD FOR SPEED CONTROL IN A GRAVITY-ACTUATED ROLLER CONVEYOR SYSTEM**

(71) Applicant: Interroll Holding AG, 6592 Sant' Antonino (CH)
(72) Inventor: Guitton, Patrick, 6592 Sant' ANTONINO (CH)
(74) Representative: Eisenführ Speiser

(57) **Abstract**

The invention relates to a roller conveyor module (11) for a gravity-actuated roller conveyor system and to a speed control mechanism (200) as well as to a method (1000) for speed control in a gravity-actuated roller conveyor system (10). The roller conveyor module (11) comprises a plurality of conveyor rollers (111) forming a support surface (100) for conveying items (1) in a conveying direction (101); a speed control mechanism (200) with a speed controller (210) and two height-adjustable rollers (220); wherein the speed controller (210) is moveable between a first, engaged position (210a) in contact with the two height-adjustable rollers (220) and a second, free position (210b); and wherein the two height-adjustable rollers (220) protrude above the support surface (100) when the speed controller (210) is in its first, engaged position (210a).

## Description

The invention relates to a roller conveyor module for a gravity-actuated roller conveyor system and to a speed control mechanism. The invention further relates to a method for speed control in a gravity-actuated roller conveyor system.

Gravity-actuated roller conveyor systems are used for conveying items, i.e., in the storage of pallets, containers, boxes or the like. Roller conveyor modules for a gravity-actuated roller conveyor system usually comprise a plurality of adjacent conveyor rollers that form a conveyor line. The outer perimeter of the conveyor rollers typically defines a support surface on which conveying items, for example pallets or containers, are placed and conveyed in a conveying direction. Under operating conditions, the roller conveyor module is usually arranged such that the conveying direction is slightly angled downwards such that the conveyed items are conveyed along the conveying direction due to gravity. At the downstream end of a gravity-actuated roller conveyor system the conveyed items typically are transferred to a further handling system, for example a fork lifter, transtoker or another conveying system, particularly to a further conveyor of a fork lifter, transtoker or another conveying system.

For example, EP 2 517 985 B1 describes a roller conveyor module for a gravity-actuated roller conveyer system and method for speed control.

In gravity-actuated roller conveyor systems and roller conveyor modules for such systems continuous improvements related to the control of the item flow are sought. Further, continuous improvements for gravity-actuated roller conveyor systems are sought, which are easy and reliable in use, allow for improved speed control, are less complex in construction and/or are a cost-efficient solution.

It is an object of the present invention to improve existing roller conveyor modules and methods for speed control in gravity-actuated roller conveyor systems in one or more of the above mentioned desired directions of improvement.

This objective is solved by a roller conveyor module for a gravity-actuated roller conveyor system, comprising: a plurality of conveyor rollers forming a support surface for conveying items in a conveying direction; a speed control mechanism with a speed controller and two height-adjustable rollers; wherein the speed controller is moveable between a first, engaged position in contact with the two height-adjustable rollers and a second, free position; and wherein the two height-adjustable rollers protrude above the support surface when the speed controller is in its first, engaged position.

A roller conveyor module as described herein comprises a speed control mechanism that can be switched on and off, i.e. the speed control mechanism has two operating modes, a speed control mode and a free flow mode that will be explained in more detail below.

During operation of the gravity-actuated roller conveyor system it is preferred that a roller conveyor module controls the speed of the conveyed items, in particular brakes the items and slows their speed down in order to avoid an uncontrolled high speed movement of the conveyed items. This is particularly preferred for a roller conveyor module that is situated at the downstream end in the conveying direction of a gravity-actuated roller conveyor system where the conveyed items are transferred to another item handling or transportation system, for example a fork lifter, transtoker or another conveying system. This transfer to a further item handling or transportation system at the downstream end of a gravity-actuated roller conveyor system regularly is a discontinuous process, i.e. items are transferred to the further item handling or transportation system at certain times while at other times no transfer takes place. When no transfer takes place, it is preferred that the conveying of the items is retarded or that the items are stored at the downstream end of the gravity-actuated roller conveyor system. Therefore, it is preferred to control the conveying speed, particularly in a roller conveyor module located at the downstream end of a gravity-actuated roller conveyor system.

In order to speed up the transfer process and to reduce the time needed for one or several items to be transferred from a roller conveyor module at the downstream end of the gravity-actuated roller conveyor system to a further item handling or transportation system it is preferred that the items can move at a higher speed on the remaining section of the conveyor line.

The roller conveyor module as described herein has the advantage to enable a speed control mechanism to operate in a speed control mode, i.e. in an operating mode where the speed of the items is controlled directly or indirectly. In a gravity-actuated roller conveyor system speed control primarily means braking or retarding the items to be conveyed. In particular, an indirect speed control for example controls the speed of the conveyor rollers and thus only indirectly controls the speed of items.

Further, the speed control mechanism of the roller conveyor module as described herein can operate in a free flow mode, i.e. in an operating mode without speed control and thus preferably with a higher speed movement of the conveyed items. In this case, preferably the speed of the conveyed items is only restricted by the (maximum or desired) conveying speed of any further item handling or transportation system the items are transferred to.

These two operating modes of the speed control mechanism are realized by the speed control mechanism with a speed controller and two height-adjustable rollers: in the speed control mode (also referred to as activated speed control mechanism) the speed controller is in its first, engaged position and controls the speed of conveyed items, in particular brakes the items such that their speed preferably does not exceed a certain desired speed. In the free flow mode (also referred to as deactivated speed control mechanism) the speed controller is in a second, free position and does not control the speed of the conveyed items, in particular the items move with a speed depending on the angle of the conveying direction as well as the characteristics of the conveyed items and the conveyor line.

In the first, engaged position, the speed controller is in contact with the two height-adjustable rollers such that the two height-adjustable rollers protrude above the support surface.

In particular, in the second, free position, the speed controller does not engage the two height-adjustable rollers and thus the speed control mechanism does not control the speed of the conveyed items, in particular does not reduce the speed of the conveyed items.

Preferably, the two height-adjustable rollers are in line with the support surface when the speed controller is in its second, free position. Preferably, in the second, free position of the speed controller, the two height-adjustable rollers do not protrude above the support surface.

A protrusion of the two height-adjustable rollers above the support surface is to be understood in particular in the way that an upper point or line of the perimeter of the two height-adjustable rollers protrudes above that support surface.

The support surface formed by the plurality of conveyor rollers is in particularly to be understood as an (imaginary) plane which comprises the upper points or lines of the perimeters of the plurality of conveyor rollers. Typically, a conveyor roller substantially is in the form of a cylinder. Usually, in its operating position, a conveyor roller is arranged substantially horizontal. Thus, typically the uppermost point in the cross-section of the roller or the uppermost line of the perimeter of the cylinder of the conveyor roller is the part of the conveyor roller that comes into contact with a conveyed item. Of course, due to the rotation of the conveyor rollers, over time the whole perimeter of the cylinder shell of the conveyor rollers will come into contact with conveyed items. However, at a given point in time, the uppermost point in the cross-section of the conveyor roller or the uppermost line of the perimeter of the conveyor roller, or at least a very small part of the cross-section or perimeter, respectively, actually is in contact with a conveyed item and forms the support surface.

A height-adjustable roller herein is to be understood in particular as a roller, the position of which can be adjusted such that its uppermost point in cross-section or its uppermost line of the perimeter can be higher or lower.

Herein, relative information, such as upper, lower, higher, etc. are to be understood in particular with respect to an operating situation of a roller conveyor system, in which preferably a rotation axis of conveyor rollers is arranged substantially horizontal.

When the speed controller is in its first, engaged position, the speed control mechanism does control the speed of the conveyed items, in particular reduces the speed of the conveyed items. In its first, engaged position, the speed controller comes into contact with the two height-adjustable rollers. In particular, it is preferred that faces of the speed controller facing in the direction of the two height-adjustable rollers come into contact with those parts of the perimeter of the two height-adjustable rollers, which face the respective faces of the speed controller.

Preferably, in the first, engaged position of the speed controller, the friction between the speed controller and the two height-adjustable rollers restrict a rotational movement of the two height-adjustable rollers such that a rotation is preferably retarded or prohibited. This indirectly restricts the speed of the conveyed items moving along the support surface of the conveyor line.

Further, in the first, engaged position of the speed controller the two height-adjustable rollers protrude above the support surface. It is preferred that in the first, engaged position of the speed controller, the two height-adjustable rollers protrude above the support surface at least 0.5 mm, or at least 1 mm, or at least 1.5 mm, or at least 2 mm, or at least 2.5 mm or at least 3 mm or at least 3.5 mm, or at least for 4 mm, or at least 5 mm.

Preferably, the position of the speed controller in its first, engaged position is higher than its position in the second, free position. In particular, it is preferred that the protrusion of the two height-adjustable rollers above the support surface in the first, engaged position of the speed controller is effected by the position of the speed controller in the first, engaged position being higher than in its second, free position. Thus, it is preferred that the speed controller moves the two height-adjustable rollers in their position protruding above the support surface by contacting them.

The protrusion of the two height-adjustable rollers above the support surface in the first, engaged position of the speed controller has the advantage that friction between the speed controller and the two height-adjustable rollers is enhanced.

Further, also the friction between a conveyed item and the two height-adjustable rollers is enhanced by the protrusion of the two height-adjustable rollers in the first, engaged position of the speed controller. Compared to existing solutions, where all rollers are in line with the support surface independent from whether the speed control mechanism is activated or not, the conveyed items put more pressure on the two height-adjustable rollers protruding above the support surface according to the present solution. In this way, the friction between the item and the two height-adjustable rollers as well as the friction between the two height-adjustable rollers and the speed controller is enhanced.

In this way, by having the two height-adjustable rollers protrude above the support surface in the first, engaged position of the speed controller, it is possible, for example, to use a smaller number of speed control mechanisms in a roller conveyor module or in a roller conveyor system, since a speed control mechanism with an enhanced friction as described herein has a better efficiency in speed control than existing solutions with lower friction.

The protrusion above the support surface of the two height-adjustable rollers in the first, engaged position of the speed controller has the further advantage that this can facilitate the release of the speed control mechanism in that - compared to existing solutions - lower forces are required to move the speed control mechanism, in particular the speed controller, from its first, engaged position into the second, free position. In particular when an item is present on the two height-adjustable rollers when the speed controller is in its first, engaged position, the weight of the item on the two height-adjustable rollers can help to move the speed controller into its second, free position when the speed control mechanism is to be released.

According to a preferred embodiment, each of the two height-adjustable rollers is pivotable about a rotating axis. Preferably, the rotating axis is substantially horizontal and/or substantially orthogonal to the conveying direction. Further preferably, each of the two height-adjustable rollers is mounted on a swinging arm and thus pivotable about a rotating axis via this pivot element.

A pivotable arrangement of the two height-adjustable rollers is an easy and reliable and thus preferred realization of the height-adjustability of these two rollers.

Further preferably, the diameter of the two height-adjustable rollers can be smaller than, larger than or substantially the same as a diameter of the conveyor rollers. Further preferably, the two height-adjustable rollers can be substantially of the same or similar kind as the plurality of conveyor rollers, in particular regarding form, dimensions, weight, material and/or other parameters. Further preferably, the height-adjustable rollers differ from conveyor rollers in particular by their height-adjustability, preferably realized by their pivotable arrangement about a rotating axis as described before. It can be preferred that this height- adjustability is the only difference between the two height-adjustable rollers and the plurality of conveyor rollers. It can also be preferred that further differences regarding diameter, form, dimensions, weight, material and/or further parameters exist.

In a further preferred embodiment, the speed controller comprises a magnet and/or a material having a magnetic field. Further preferably, the two height-adjustable rollers comprise magnetic material and/or a material affectable by a magnetic field.

Preferably, this leads to the two height-adjustable rollers being attracted by the speed controller once the distance between them is small enough for the effects of the magnetic field to work. This has the advantage that the engagement and contact between the speed controller and the two height-adjustable rollers can be enhanced and/or more reliable and/or effected faster. This also contributes to an improved friction between the speed controller at the two height-adjustable rollers, and thus further enhancing the advantages as described above. The magnet can be a permanent magnet or an electromagnet, for example.

In a further preferred embodiment, the speed controller has a cross-section in form of a circle or in form of a polygon or a free form . For example, when the speed controller has a cross-section in the form of a circle, the speed controller can have the overall form of a cylinder. For example, if the speed controller is essentially in the form of a cylinder, it can also be referred to as a speed control roller. Preferably, such a speed control roller has a larger diameter than the two height-adjustable rollers. Further preferably, the speed controller can have a non-circular cross-section, e.g. in form of a polygon or a free form. For example, the overall form of the speed controller can be in form of a wedge or chock. Preferably, the faces of the speed controller facing the two height-adjustable rollers and/or arranged for coming into contact with the two height-adjustable rollers in the first, engaged position of the speed controller can be curved and/or concave. Preferably, the curvature of these faces is adapted to match or be in close tolerance to the perimeter and/or diameter of the two height-adjustable rollers.

In a further preferred embodiment, the speed controller comprises a coating with friction enhancing properties and/or a coating comprising or consisting of rubber. Preferably, such a coating is present in particular on the faces of the speed controller facing the two height-adjustable rollers and/or coming into contact with them. Such a coating can have the advantage of further improving the friction between the speed controller and the two height-adjustable rollers, such that the advantages mentioned above of an enhanced friction further strengthened.

In a further preferred embodiment, the speed controller is arranged on a bearing element, wherein preferably the bearing element is pivotable about a pivot axis. Preferably, the pivot axis is substantially horizontal and/or substantially orthogonal to the conveying direction.

Preferably, it is via this bearing element that the speed controller can be brought into its two different positions.

It is further preferred that the bearing element comprises a recess for receiving at least a part of the outer periphery of the speed controller therein.

In a preferred embodiment, an actuator is disposed downstream from the speed control mechanism in the conveying direction of the conveyor module; the actuator being moveable between a hold position and a trigger position. Further preferably, a stopping mechanism is provided comprising a stopping element moveable between a stopping position in which the stopping element protrudes above the support surface and preferably causes a conveyed item on the support surface to be stopped, and a release position. In the release position the stopping element preferably does not protrude above the support surface and preferably does not cause a conveyed item on the support surface to be stopped.

In a further preferred embodiment, the stopping mechanism is coupled to the speed control mechanism, preferably such that the speed controller is moved from the first, engaged position to the second, free position when an item reaches the stopping element and/or such that the speed controller is in the first, engaged position when the stopping element is in its stopping position and/or such that the speed controller is in the second, free position when the stopping element is in its release position.

In a further preferred embodiment, the actuator is coupled to the speed control mechanism, preferably such that the speed controller is in the first, engaged position when the actuator is in its hold position and the speed controller is in the second, free position when the actuator is in its trigger position; and/or
Further preferably, the stopping mechanism is coupled to the actuator such that the stopping element is in its stopping position when the actuator is in its hold position and the stopping element is in its release position when the actuator is in its trigger position.

For example, the different coupling options can be realized via a coupling mechanism. In particular, the different coupling options can be realized via a single and/or common coupling mechanism or by two or more separate coupling mechanisms.

For example, the switch in operation mode of the speed controller can be preferably triggered by an actuator that is coupled to the speed control mechanism via a coupling mechanism. The switch from free flow mode to speed control mode can be termed activation, the switch from speed control mode to free flow mode can be termed deactivation.

The actuator is preferably disposed downstream from the speed control mechanism in the conveying direction and preferably located at or close the downstream end of the roller conveyor module located preferably at the downstream end of the gravity-actuated roller conveyor system. The actuator preferably has a hold position and a trigger position and is coupled via the coupling mechanism to the speed controller of the speed control mechanism such that the trigger position of the actuator triggers the free flow mode with the speed controller in its second, free position and the hold position of the actuator triggers the activation of the speed control mode with the speed controller in its first, engaged position.

In this way, it is possible to change the operation mode of the speed control mechanism by changing the position of the actuator. For example, if the actuator is located at the downstream end of a gravity-actuated roller conveyor system, the actuator can be moved into its trigger position by an element of the further item handling or transportation system, for example by the jack of a transtoker. In this way the actuator is only moved into its trigger position when a transfer is desired and a required vehicle of the further item handling or transportation system is present at the downstream end of the gravity-actuated roller conveyor system.

In a preferred embodiment, the actuator is biased in its hold position and has to be moved against that bias in order to reach the trigger position. This has the further advantage, that the actuator will return to the hold position and thus activate the speed control mode when no force is present that moves the actuator against the bias into the trigger position.

A further preferred embodiment is characterized in that the actuator comprises an actuating lever pivotable about a pivotal point. An embodiment with a pivotable actuating lever is particularly preferred since a pivotable actuating lever can be easily triggered, for example by the jack of a transtoker when it reaches the downstream end of a gravity-actuated roller conveyor system in order to receive items to be transferred.

In order to further increase the safety in the operation of a gravity-actuated roller conveyor system, particularly the safety of a transfer operation from conveyed items to another item handling or transportation system, a stopping mechanism can be located preferably at the downstream end of a gravity-actuated roller conveyor system in order to prevent items to be conveyed further than the end of the conveyor line at the downstream line of the gravity-actuated roller conveyor system, particularly if no transfer to a further item handling or transportation system is desired. However, in order to enable the items to be transferred and thus leave the conveyor line in a transfer situation as desired, the stopping element of the stopping mechanism can be retrieved to a release position located below the support surface and thus not interfering with the movement of the items.

Additionally or alternatively, the actuator can be coupled to the stopping mechanism such that the stopping element is in its stopping position when the actuator is in its hold position and the stopping element is in its release position when the actuator is in its trigger position.

This embodiment can be particularly preferred in order to, for example, couple the stopping mechanism to the same actuator the speed control mechanism is coupled to. In this way a free flow of the items can be ensured with the speed control mechanism being in its free flow mode and the stopping mechanism not preventing the items from leaving the conveyor line in its released position. This embodiment further ensures that items are prevented from leaving the conveyor line in a situation when this is not desired by stopping the items with the stopping element in the stopping position and the speed control mechanism in the speed control mode.

Additionally or alternatively, the stopping mechanism can preferably be coupled to the speed control mechanism, preferably such that the speed controller is moved from the first, engaged position to the second, free position when an item reaches the stopping element and/or such that the speed controller is in the first, engaged position when the stopping element is in its stopping position and/or such that the speed controller is in the second, free position when the stopping element is in its release position.

In this way the transfer of an item to an adjacent conveyor can be expedited by deactivating the speed control mechanism once the stopping mechanism is released.

A preferred embodiment of the roller conveyor module is characterized in that the speed control mechanism comprises a lever mechanism.

Via a lever mechanism it is possible to realize different geometrical arrangements of the location of the speed controller of the speed control mechanism, possibly also in interaction with the coupling mechanism.

For example, the lever mechanism can connect the coupling mechanism with the speed controller, in particular via the bearing element. Preferably, the lever mechanism can be adapted for releasing and or engaging the bearing element, in particular in order to move the speed controller between its two different positions.

In a further preferred embodiment a roller conveyor module is characterized in that the speed control mechanism comprises at least one resilient element, preferably at least one spring, biasing the speed controller is in its first, engaged position.

This embodiment has the advantage that the standard mode of operation is the speed control mode with speed controller in its first, engaged position. The free flow mode can only be triggered against the bias of the at least one resilient element. This improves the safety of a gravity-actuated roller conveyor system. A further advantage of the bias via at least one resilient element is that in constructions using friction as means for speed control, the friction can be improved or adjusted by intensifying of adjusting the bias of the at least one resilient element.

A preferred embodiment is characterized in that the coupling mechanism comprises a coupling rod moveable in an engaging direction and in a disengaging direction, wherein preferably the engaging direction is opposite to the disengaging direction.

A simple and reliable coupling mechanism is a coupling rod extending along preferably at least a part of a roller conveyor module. Preferably the rod can be moved in two opposite directions (engaging and disengaging directions), preferably via pulling and pushing the rod.

In a further preferred embodiment the roller conveyor module is characterized by a separation mechanism comprising a separating element moveable between a stopping position in which the separating element protrudes above the support surface and preferably causes a conveyed item on the support surface to be stopped, and a release position. In a release position, the separating element preferably does not protrude above the support surface and preferably is located below the support surface and preferably does not cause a conveyed item on the support surface to be stopped.

In order to further increase the safety of the operation of a gravity-actuated roller conveyor system, particularly the safety during the transfer of items from the gravity-actuated roller conveyor system to a further item handling or transportation system, the separation mechanism preferably is adapted to stop items from being conveyed further in the conveying direction in a location upstream of the downstream end of the gravity-actuated roller conveyor system. In this way it can be avoided that the full load of all items being conveyed on the conveyor line rests on the downstream end of the gravity-actuated roller conveyor system, for example on a stopping mechanism located there or on a vehicle receiving items from the gravity-actuated roller conveyor system. By stopping the line of items to be conveyed in a position upstream of the downstream end of the gravity-actuated roller conveyor system, the number of items between the downstream end and the separation mechanism is limited in thus the possible damage resulting from an uncontrolled high speed movement of items towards or over the downstream end of the gravity-actuated roller conveyor system is also limited. In order to take up the conveying process, the separating element of the separation mechanism can be moved from its stopping position into a release position in which the separating element does not stop the items from being conveyed on the support surface.

In a further preferred embodiment the roller conveyor module is characterized by two, three or several speed control mechanisms, each comprising a speed control mechanism with a speed controller and two height-adjustable rollers; wherein the speed controller is moveable between a first, engaged position in contact with the two height-adjustable rollers and a second, free position; and wherein the two height-adjustable rollers protrude above the support surface when the speed controller is in its first, engaged position.

Depending on the number and weight of the conveyed items to be retarded by the roller conveyor module it can be advantageous to provide for more than one speed control mechanism. It is preferred that the two, three or more speed control mechanisms are of the same type. Further preferably, the two, three or more speed control mechanisms may be actuated or deactivated, respectively, via one single, common mechanism, possibly via one single, common coupling rod or by different mechanisms, possibly triggered by different events and/or in different situations.

According to a further aspect, it is provided a speed control mechanism for a roller conveyor module for a gravity-actuated roller conveyor system of any of the preceding claims, the speed control mechanism comprising: a speed controller and two height-adjustable rollers; wherein the speed controller is moveable between a first, engaged position in contact with the two height-adjustable rollers and a second, free position; and wherein the two height-adjustable rollers are in an elevated position when the speed controller is in its first, engaged position. In particular, the two height-adjustable rollers protrude above the support surface of the roller conveyor module formed by the plurality of conveyor rollers.

According to a further aspect, it is provided a method for speed control in a gravity-actuated roller conveyor system, comprising the steps: conveying items in a conveying direction on a support surface formed by a plurality of conveyor rollers; controlling the speed of the conveyed items by a speed control mechanism with a speed controller and two height-adjustable rollers by moving the speed controller into a first, engaged position in contact with the two height-adjustable rollers such that the two height-adjustable rollers protrude above the support surface; ceasing to control the speed of the conveyed items by moving the speed controller into a second, free position.

As to the advantages, possible preferred embodiments and details of these further aspects, reference is made to the corresponding aspects, embodiments and advantages described above for the first aspect.

Preferred examples shall now be described with reference to the attached drawings, in which:
- Fig 1:: is a lateral view of a downstream end of an example gravity-actuated roller conveyor system with a roller conveyor module and an adjacent conveyor of a further item handling or transportation system in a situation where an item is conveyed towards the end of the conveyor line and the speed controller is activated;
- Fig 2:: the example roller conveyor system of figure 1 in a situation where the item is at the end of the conveyor line and the speed controller is activated;
- Fig 3:: the example roller conveyor system of figure 2 with the speed controller deactivated;
- Fig 4:: the example roller conveyor system of figure 3 in a situation where the item is transferred to the adjacent conveyor of a further item handling or transportation system;
- Fig 5:: the example roller conveyor system of figure 4 in a situation where the item has been transferred to the adjacent conveyor of a further item handling or transportation system and the speed controller is activated again;
- Fig. 6:: a detail of the pivotable rollers of an example speed controller;
- Fig. 7:: an example of a speed controller in the deactivated position;
- Fig. 8:: an enlarged view of detail C of the speed controller according to figure 7;
- Fig. 9:: an example of a speed controller in the activated position;
- Fig. 10:: an enlarged view of detail D of the speed controller according to figure 9;
- Fig. 11:: a three-dimensional bottom view of a part of a conveyor module with a speed control mechanism;
- Fig. 12:: a schematic flow diagram of an example method for speed control in a gravity-actuated roller conveyor system.

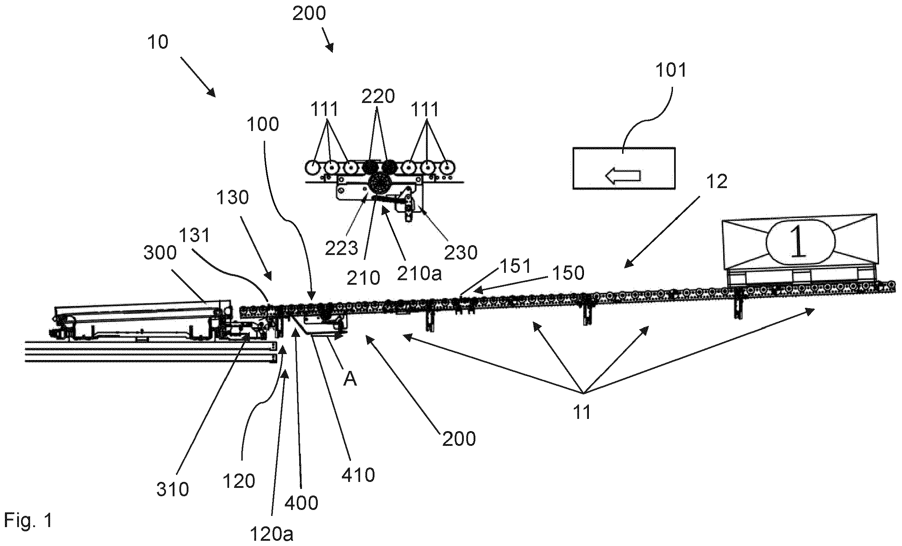

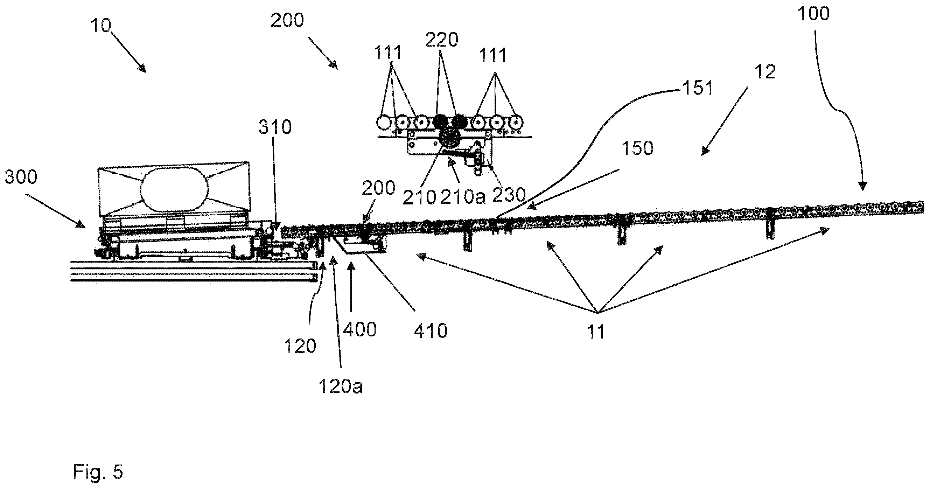

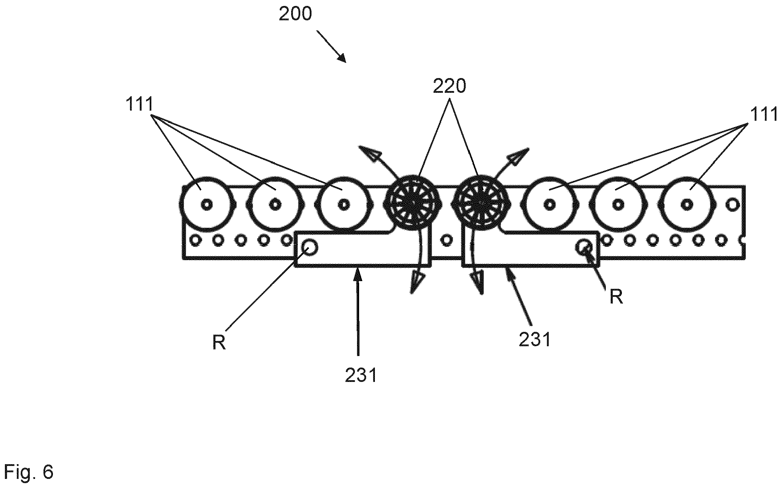

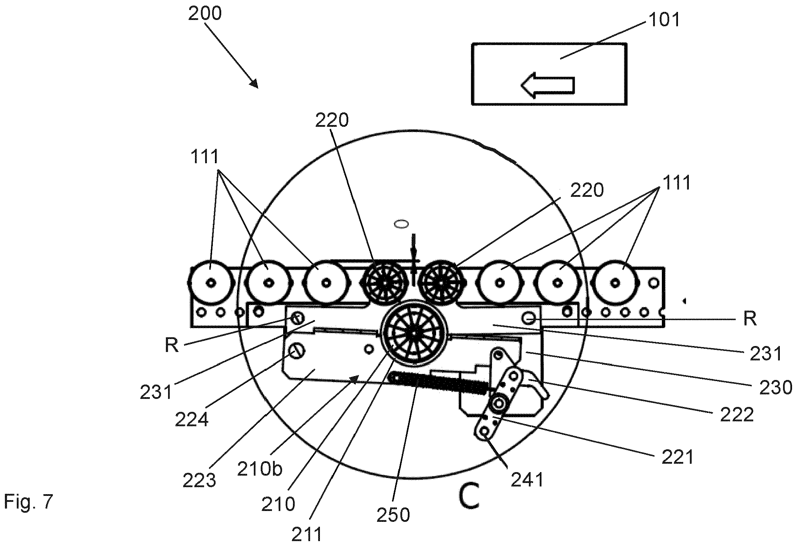

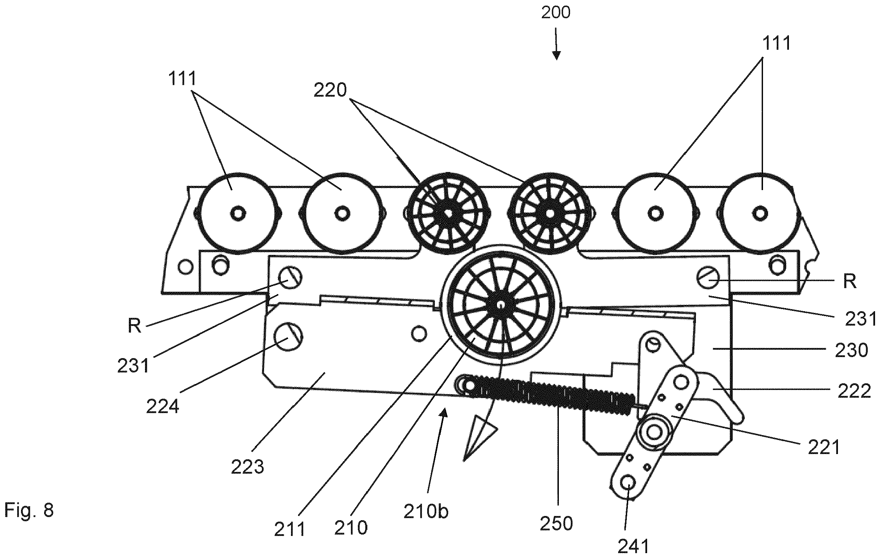

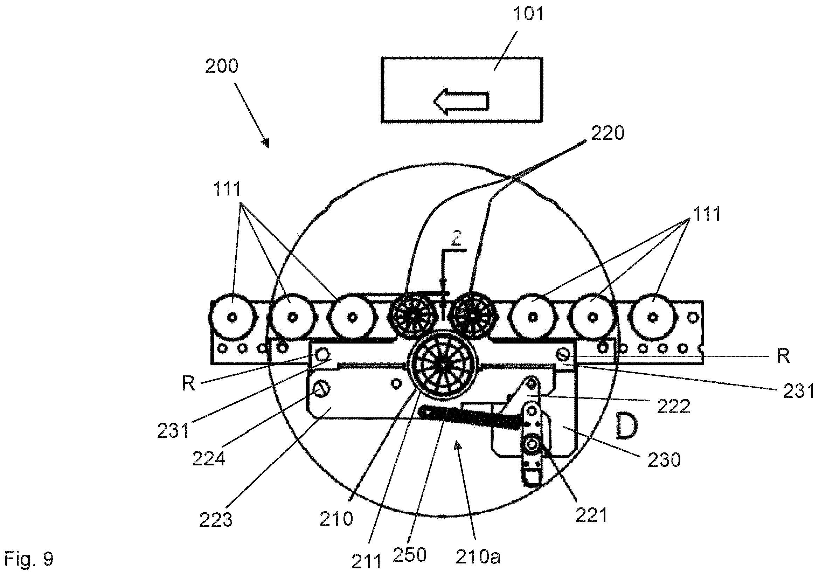

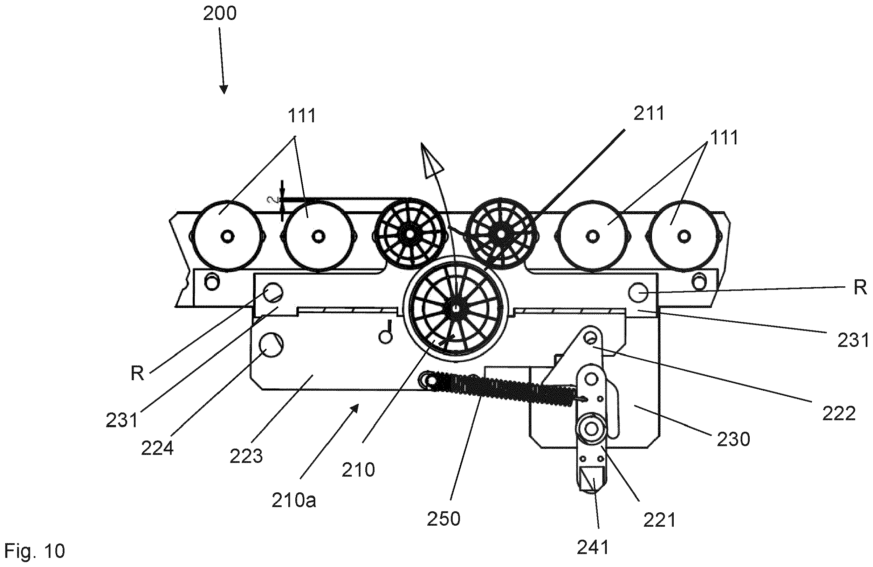

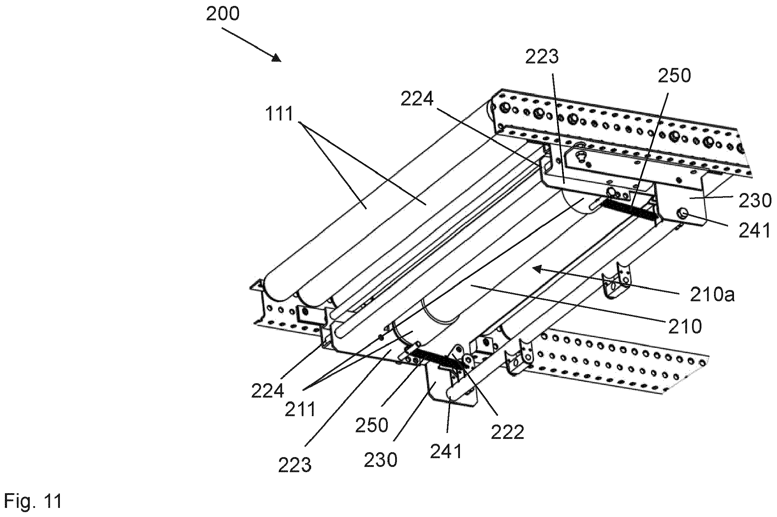

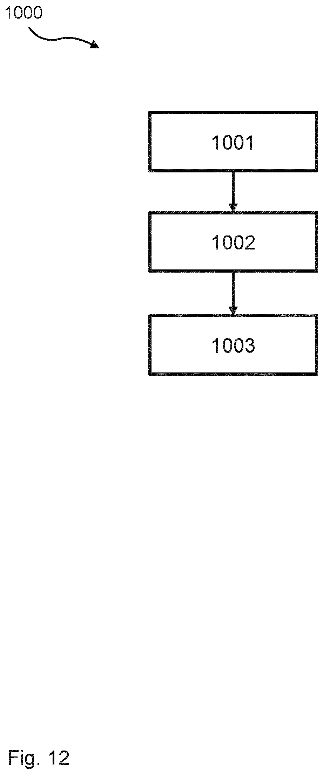

Figures 1-5 depict a roller conveyor module 11 at the downstream end of a gravity-actuated roller conveyor system 10 comprising a conveyor line 12 with a plurality of conveyor rollers 111 arranged one behind the other. The outer perimeter of the conveyor rollers forms a support surface 100 for conveying items 1 in a conveying direction 101. The conveying items 1 depicted in figures 1-5 are pallets; other conveying items may be containers, boxes or the like. The conveying direction 101 is slightly inclined downwards in order to enable a gravity-actuated conveying of the items. The roller conveyor module 11 comprises a speed control mechanism 200 with a speed controller 210 and two height-adjustable rollers 220. In figures 1-3 and 5, the speed control mechanism 200 is additionally shown as a separate, enlarged item above the conveyor line 12. Further, figures 6-11 show details of the speed control mechanism 200. Figure 12 shows a method 1000 for speed control in a gravity-actuated roller conveyor system10.

The roller conveyor module 11 at the downstream end of the gravity-actuated roller conveyor system 10 comprises a speed control mechanism 200. The speed control mechanism 200 of the roller conveyor module 11 can operate in a speed control mode, which preferably means in an operating mode where the speed of the items 1 is controlled. In a gravity-actuated roller conveyor system speed control primarily means braking or retarding the items 1 to be conveyed. The speed control mechanism 200 of the roller conveyor module 11 can further operate in a free flow mode, which preferably means in an operating mode without speed control and thus with a higher speed movement of the conveyed items 1. In this case, the speed of the conveyed items 1 is preferably only restricted by the (maximum or desired) conveying speed of any further item handling or transportation system the items are transferred to.

These two operating modes of the speed control mechanism 200 are realized by the speed controller 210: In the speed control mode the speed controller 210 is in its first, engaged position 210a and controls the speed of conveyed items 1, in particular brakes the items 1 such that their speed does not exceed a certain desired speed. In the free flow mode, the speed controller 210 is in a second, free position 210b and does not control the speed of the conveyed items 1, in particular the items move with a speed depending on the angle of the conveying direction as well as the characteristics of the conveyed items 1 and the conveyor line 12.

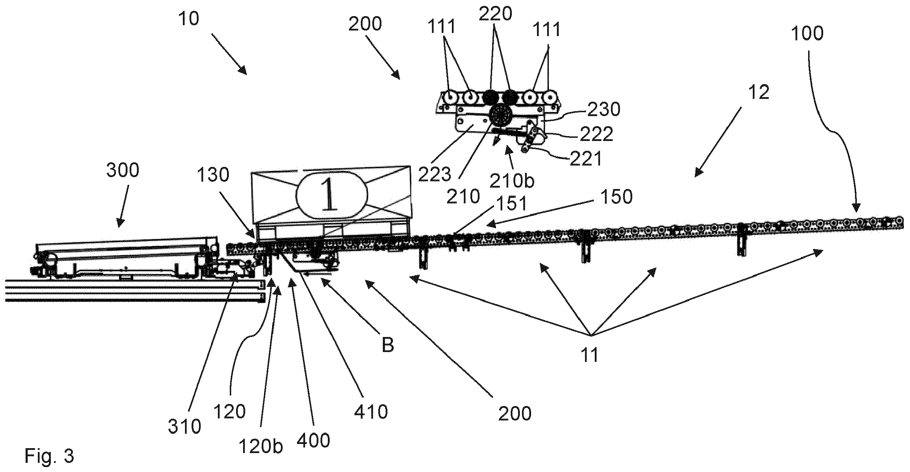

In figures 1, 2, 5, 9, 10 and 11, the speed control mechanism 200 is shown with the speed controller 210 in its first, engaged position 210a. In figures 3, 4, 7 and 8, the speed control mechanism 200 is shown with the speed controller 210 in its second, free position 210b. Figure 6 shows the speed control mechanism 200 without the speed controller 210, but only with the two height-adjustable rollers 220.

In figures 1-5 further a conveyor 300, for example a transtoker as a further item handling or transportation system, is depicted to receive items 1 from the conveyor line 12. For example, the transtoker conveyor 300 can further comprise an actuation lever 310 that can be moved from a first position into a second position by activating an electrical or hydraulic cylinder. Preferably, with the actuation lever 310 in its second position, a driver of the transtoker can trigger the actuator 120.

For example, triggering the actuator 120 can effect that the stopping element 131 of the stopping mechanism 130 moves into its release position. Further, the speed control mechanism 200 can be coupled to the stopping mechanism 130, e.g. via the coupling mechanism 400, such that the release of the stopping mechanism 130 deactivates the speed control mechanism 200.

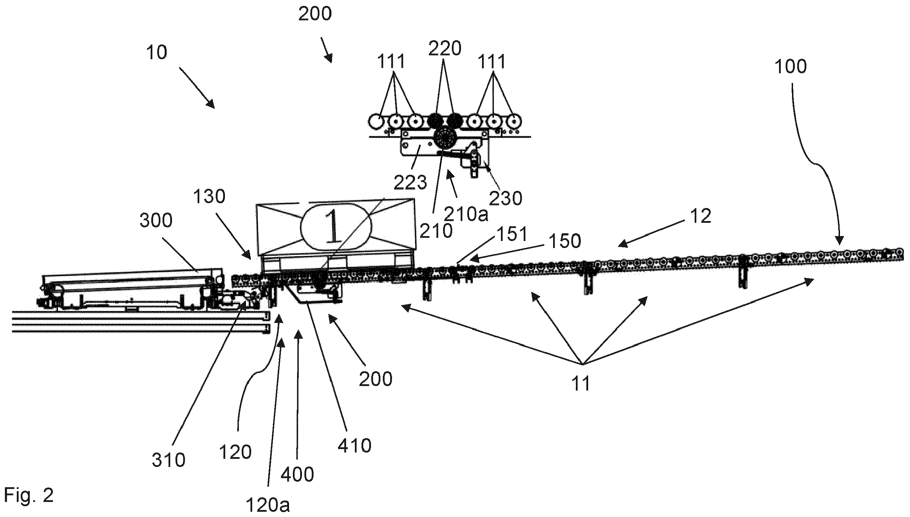

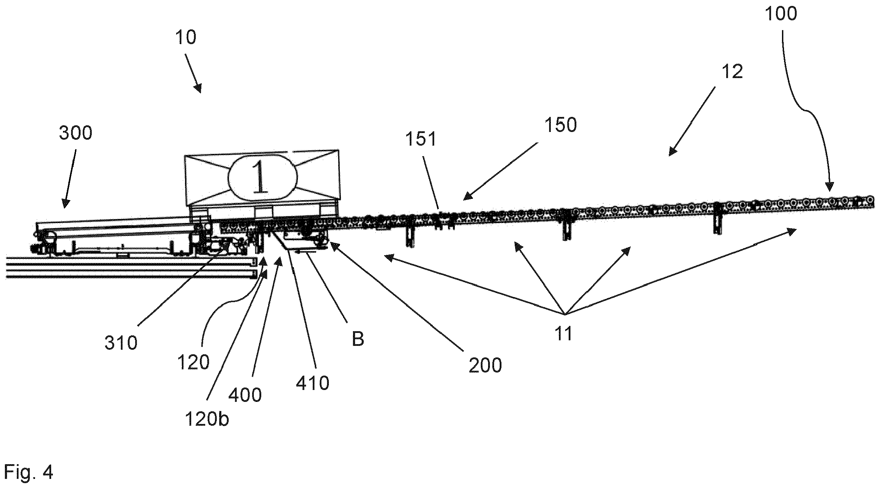

In figure 1, the speed control mechanism 200 is activated, which means that the speed controller 210 is in its first, engaged position. The item 1 will proceed downstream along the conveyor line 12 of the gravity actuated roller conveyor system 10 in conveying direction 101 with a free flow speed, or preferably with a speed controlled by a further speed controller of the conveyor lane 12 in fixed position, 'until it reaches the speed control mechanism 200. There item 1 will reduce its speed due to the activation of the speed control mechanism 200. With this reduced speed, the item 1 will proceed towards the stopping element 131 of stopping mechanism 130 close to the downstream end of the roller conveyor system 10 as shown in figure 2. As shown in figure 3, once the item 1 reaches the stopping mechanism 130 and/or once the stopping mechanism 130 is released, the speed control mechanism 200 gets deactivated, preferably via the coupling mechanism 400, such that the speed controller 210 moves into its second, free position 210b. In addition, the stopping mechanism 130 is released, e.g. via the actuator 120. Thus, the item 1 is now free to move on to the adjacent conveyor 300 as shown in figure 4. Since the speed control mechanism 200 is deactivated in this situation, it is not interfering with the transfer from the item 1 to the adjacent conveyor 300 but rather allows for a free flow of the item 1 to the adjacent conveyor 300. Once the item 1 has left the conveyor line 12 of roller conveyor system 10, the stopping element 131 of stopping mechanism 130 moves back into its stopping position. Via the coupling mechanism 400, is also again activates the speed control mechanism 200 and brings the speed controller 210 into its first, engaged position.

In the example depicted, the speed control mechanism 200 comprises a speed controller 210 in the form of a cylinder, also referred to as a speed control roller. The speed controller 210 comprises material with a magnetic field and is further coated with a coating 211 with friction enhancing properties, in particular a rubber coating.

The speed control roller is movable between a first, engaged position 210a shown in figures 1, 2, 5, 9, 10 and 11 and a second, free position 210b shown in figures 3, 4, 7 and 8. In the first, engaged position 210a of the speed controller 210, the speed controller is in contact with the two height-adjustable rollers 220 of the speed control mechanism 200 and effects that the two height-adjustable rollers 220 protrude above the support surface 100. The speed controller 210 is biased against the two height-adjustable rollers 220 by a spring 250 and retards or restricts the rotational movement of the two height-adjustable rollers 220 by friction. The contact is enhanced by the magnetic properties as described above. The speed controller 210 is arranged on a bearing element 223 pivotable about a pivot axis 224 and connected via a lever mechanism 221, 222 to a base plate 230 of the speed control mechanism 200 and via knee joint coupler 241 to the coupling rod 410 of the coupling mechanism 400.

As can be seen particularly in Fig. 6, each of the two height-adjustable rollers 220 is pivotable about a rotating axis R. The rotating axis R is substantially horizontal and substantially orthogonal to the conveying direction. Each of the two height-adjustable rollers 220 is mounted on a pivot element 231 in the form of a swinging arm and thus pivotable about the rotating axis R via this pivot element 231.

As can be seen from a comparison of the figures, the speed controller 210 can be moved from a first, engaged position 200a depicted in figures 1, 2, 5, 9, 10 and 11 to the second, free position 200b depicted in figures 3, 4, 7 and 8 by a movement of rod 410 in a disengaging direction B. Vice versa, the speed controller 210 can be moved from its second, free position 210b depicted in figures 3, 4, 7 and 8 into its first, engaged position 210a, depicted in figure figures 1, 2, 5, 9, 10 and 11 by a movement of rod 410 in the engaging direction A.

The lever mechanism 221 , 222 transfers the movement of the rod 410 along the directions A, B into a pivoting movement of bearing plate 223 about pivot axis 224 and this results in a movement of the speed control roller 210 between its first engaging position 210a and its second, free position 210b and vice versa. In moving the speed control roller 210 from its first engaging position 210a into its second, free position 210 b, the movement of the rod 410 has to overcome the biasing force of spring 250.

Rod 400 is preferably coupled to the stopping mechanism 130, such that the release of the stopping mechanism also deactivates the speed control mechanism 200.

With the speed control mechanism 200 in the speed control mode, i.e. with a speed controller in its first, engaged position, items 1 are retarded and move with a lower speed than with the speed control mechanism 200 in the free flow mode, i.e. with the speed controller not controlling the speed of the items 1. Herein, the speed control of the items 1 is indirect. The speed control of the speed control mechanism 200 is an indirect speed control, since speed control roller 210 directly controls the speed of the two height-adjustable roller 220 and thus only indirectly controls the speed of items 1.

The safety of the roller conveyor module 11 for the gravity-actuated roller conveyor system 10 can be further improved in that a stopping mechanism 130 and a separation mechanism 150 are provided.

The stopping mechanism 130 comprises a stopping element 131 that is moveable between a stopping position and a release position. In the stopping position the stopping element 131 extends across the support surface 100 as depicted in figures, 1, 2, and 5 and causes the conveyed item 1 on the support surface 100 to be stopped. In the release position depicted in figures 3, 4, the stopping element 131 is located below the support surface 100 and does not cause a conveyed item on the support surface 100 to be stopped. Preferably, the stopping mechanism 130 is coupled to the actuator 120 such that the stopping element 131 is in its stopping position when the actuator 120 is in its hold position 120a (depicted in figures1, 2, and 5) and the stopping element 131 is in its released position when the actuator 120 is in its trigger position 120b (depicted in figures 3, 4).

The separation mechanism 150 comprises a separating element 151 movable between a stopping position and a release position. In the stopping position the separating element 151 extends across the support surface 100 and causes a conveyed item 1 on the support surface 100 to be stopped. In the released position the separating element 151 can be located below the support surface 100 and then does not cause a conveyed item 1 on the support surface 100 to be stopped.

As can be seen in figures 1, 2, 5, 9 and 10, when the speed controller 210 in its first, engaged position 210a, the two height-adjustable rollers protrude above the support surface, in the example depicted by 2 mm. This advantageously enhances the friction between the speed controller 210 and the two height-adjustable rollers 220. Further, also the friction between a conveyed item 1 and the two height-adjustable rollers 220 is enhanced through the protrusion of the two height-adjustable rollers 200 in the first, engaged position 210a of the speed controller 210, since the conveyed item 1 put more pressure on the two height-adjustable rollers 220 when they protrude above the support surface 100. In this way, the friction between the item 1 and the two height-adjustable rollers 220 as well as the friction between the two height-adjustable rollers 220 and the speed controller 210 is enhanced. This means that a smaller number of speed control mechanisms 200 in a roller conveyor module 11 or in a roller conveyor system 10 can be used, since a speed control mechanism 200 with an enhanced friction as described herein has a better efficiency in speed control than existing solutions with lower friction.

The protrusion above the support surface 100 of the two height-adjustable rollers 220 in the first, engaged position 210a of the speed controller 210 can further facilitate the release of the speed control mechanism 200. In particular, compared to existing solutions, lower forces are required to move the speed controller 210 from its first, engaged position 210a into the second, free position 210b, in particular when an item 1 is present on the two height-adjustable rollers 220, its weight can help to move the speed controller 210 into its second, free position 210b when the speed control mechanism 200 is to be released.

In Fig. 12, the method 1000 for speed control in a gravity-actuated roller conveyor system is exemplarily shown in a schematic flow diagram. The method comprises the step 1001 of conveying items 1 in a conveying direction 101 on a support surface 100 formed by a plurality of conveyor rollers 111. The method further comprises the step 1002 of controlling the speed of the conveyed items by a speed control mechanism 200 with a speed controller 210 and two height-adjustable rollers 220. This is realized by moving the speed controller 210 into a first, engaged position 210a in contact with the two height-adjustable rollers 220 such that the two height-adjustable rollers 220 protrude above the support surface 100. Further, the method comprises the step 1003 of ceasing to control the speed of the conveyed items by moving the speed controller 210 into a second, free position 210b.

### LIST OF REFERENCE SIGNS

- 1: item
- 10: roller conveyor system
- 11: roller conveyor module
- 12: conveyor line
- 100: support surface
- 101: conveying direction
- 111: conveyor roller
- 120: actuator
- 120a: hold position of actuator
- 120b: trigger position of actuator
- 130: stopping mechanism
- 131: stopping element
- 150: separation mechanism
- 151: separating element
- 200: speed control mechanism
- 210: speed controller
- 211: coating
- 210a: first, engaged position of speed controller
- 210b: second, free position of speed controller
- 220: height-adjustable roller
- 221: lever of lever mechanism
- 222: lever of lever mechanism
- 223: bearing element
- 224: pivot axis
- 230: base plate
- 231: pivot element
- 241: knee joint coupler
- 250: resilient element
- 300: conveyor
- 310: actuation lever
- 400: coupling mechanism
- 410: coupling rod
- A: engaging direction
- B: disengaging direction
- R: rotating axis

## Claims

1. A roller conveyor module (11) for a gravity-actuated roller conveyor system (10), comprising:
- a plurality of conveyor rollers (111) forming a support surface (100) for conveying items (1) in a conveying direction (101);
- a speed control mechanism (200) with a speed controller (210) and two height-adjustable rollers (220);
- wherein the speed controller (210) is moveable between a first, engaged position (210a) in contact with the two height-adjustable rollers (220) and a second, free position (210b); and
- wherein the two height-adjustable rollers (220) protrude above the support surface (100) when the speed controller (210) is in its first, engaged position (210a).

2. The roller conveyor module of claim 1,
**characterized in that** each of the two height-adjustable rollers (220) is pivotable about a rotating axis (R).

3. The roller conveyor module of any of the preceding claims,
**characterized in that** the speed controller (210) comprises a magnet and/or a material having a magnetic field.

4. The roller conveyor module of any of the preceding claims,
**characterized in that** the speed controller (210) has a cross-section in form of a circle or in form of a polygon or a free form.

5. The roller conveyor module of any of the preceding claims,
**characterized in that** the speed controller (210) comprises a coating with friction enhancing properties and/or a coating comprising or consisting of rubber.

6. The roller conveyor module of any of the preceding claims,
**characterized in that** the speed controller (210) is arranged on a bearing element, wherein preferably the bearing element is pivotable about a pivot axis.

7. The roller conveyor module of any of the preceding claims, further comprising
- an actuator (120) disposed downstream from the speed control mechanism (200) in the conveying direction (101) of the conveyor module; the actuator (120) being moveable between a hold position (120a) and a trigger position (120b); and/or
- a stopping mechanism (130) comprising a stopping element (131) moveable between a stopping position in which the stopping element (131) protrudes above the support surface (100), and a release position.

8. The roller conveyor module of any of the preceding claims, wherein
- the stopping mechanism (130) is coupled to the speed control mechanism (200), preferably such that the speed controller (210) is moved from the first, engaged position (210a) to the second, free position (210b) when an item (1) reaches the stopping element (131) and/or such that the speed controller (210) is in the first, engaged position (210a) when the stopping element (131) is in its stopping position (120a) and/or such that the speed controller is in the second, free position (210b) when the stopping element (131) is in its release position (120b); and/or
- the actuator (120) is coupled to the speed control mechanism (200), preferably such that the speed controller (210) is in the first, engaged position (210a) when the actuator (120) is in its hold position (120a) and the speed controller is in the second, free position (210b) when the actuator (120) is in its trigger position (120b); and/or
- the stopping mechanism (130) is coupled to the actuator (120) such that the stopping element (131) is its stopping in position when the actuator (120) is in its hold position (120a) and the stopping element (131) is in its release position when the actuator (120) is in its trigger position (120b).

9. The roller conveyor module of any of the preceding claims,
**characterized in that** the speed control mechanism (200) comprises a lever mechanism (221, 222).

10. The roller conveyor module of any of the preceding claims,
**characterized in that** the speed control mechanism (200) comprises at least one resilient element (250), preferably at least one spring, biasing the speed controller (210) is in its first, engaged position (210a).

11. The roller conveyor module of any of the preceding claims,
**characterized by** a coupling mechanism (400), which preferably comprises a coupling rod (410) moveable in an engaging direction (A) and in a disengaging direction (B), wherein preferably the engaging direction is opposite to the disengaging direction.

12. The roller conveyor module of any of the preceding claims,
**characterized by** a separation mechanism (150) comprising a separating element (151) moveable between a stopping position in which the separating element (151) protrudes above the support surface (100), and a release position.

13. The roller conveyor module of any of the preceding claims, **characterized by** two, three or several speed control mechanisms (200).

14. A speed control mechanism (200) for a roller conveyor module (11) for a gravity-actuated roller conveyor system (10) of any of the preceding claims, the speed control mechanism (200) comprising:
- a speed controller (210) and two height-adjustable rollers (220);
- wherein the speed controller (210) is moveable between a first, engaged position (210a) in contact with the two height-adjustable rollers (220) and a second, free position (210b); and
- wherein the two height-adjustable rollers (220) are in an elevated position when the speed controller (210) is in its first, engaged position (210a).

15. A method (1000) for speed control in a gravity-actuated roller conveyor system (10), comprising the steps:
- conveying (1001) items (1) in a conveying direction (101) on a support surface (100) formed by a plurality of conveyor rollers (111);
- controlling (1002) the speed of the conveyed items by a speed control mechanism (200) with a speed controller (210) and two height-adjustable rollers (220) by moving the speed controller (210) into a first, engaged position (210a) in contact with the two height-adjustable rollers (220) such that the two height-adjustable rollers (220) protrude above the support surface (100);
- ceasing to control (1003) the speed of the conveyed items by moving the speed controller (210) into a second, free position (210b).
